# EUROPEAN PATENT SPECIFICATION

(11) **EP 3 873 771 B1**
(45) Date of publication and mention of the grant of the patent: **16.07.2025**
(21) Application number: 19802318.6
(22) Date of filing: 29.10.2019
(51) Int. Cl.: B60L 53/80, B60K 1/04, B60S 5/06

(54) **A MINING VEHICLE AND A METHOD FOR REPLACING A BATTERY**
BERGBAUFAHRZEUG UND VERFAHREN ZUM ERSETZEN EINER BATTERIE
VÉHICULE MINIER ET PROCÉDÉ DE REMPLACEMENT D'UNE BATTERIE

(30) Priority: 30.10.2018 SE 1851351
(43) Date of publication of application: 08.09.2021
(73) Proprietor: Epiroc Rock Drills Aktiebolag, 701 91 Örebro (SE)
(72) Inventor: PERSSON, Johan, 692 71 Kumla (SE); ÖSTERLUND, Rolf, 702 33 Örebro (SE)
(74) Representative: Epiroc Rock Drills AB
(86) International application number: PCT/SE2019/051076
(87) International publication number: WO 2020/091672

(56) References cited:
- EP-A1- 2 605 308
- WO-A1-2016/198552
- US-A1- 2008 006 459
- US-A1- 2012 018 235
- US-A1- 2015 114 736
- US-A1- 2017 158 070

## Description

### TECHNICAL FIELD

The present invention relates to a mining vehicle with a powertrain configured for electrical propulsion. The invention also relates to a battery for a mining vehicle, and a method for replacing a battery in the mining vehicle.

### BACKGROUND

Underground mining vehicles, such as trucks, loaders, drilling rigs and haulers have historically been driven by combustion engines. However, due to environmental reasons, mining companies are increasingly choosing electrically driven mining vehicles. This way, mining companies can save money on ventilation and fuel and at the same time obtain a more pleasant working environment in the mines. Electrically driven mining vehicles, also called batterypowered mining vehicles, may thus comprise at least one electrical motor for propulsion of the vehicle. For power supply to the electrical motor a battery is needed. The problem with electrically driven mining vehicles is that the battery eventually will be discharged and need charging.

Charging a battery in a mining vehicle may be performed in different ways and as an example, the mining vehicle may have to be operated to a specific charging station intended for charging the battery while arranged on the vehicle. This, however, requires planning of when to charge the battery and is typically a relatively time consuming process. Another example is to remove the battery from the vehicle and charge it separately from the vehicle. With this solution, a charged replacement battery will typically be arranged in the vehicle while the other battery is being charged. This way, the time out of production for the vehicle may be reduced. Also, the load on the battery and the power grid can be reduced since the replaced battery can be charged more slowly. However, replacing a battery of a mining vehicle as part of the daily routine and not at a service location may be difficult. The harsh and cramped environment in which the mining vehicles operate may complicate the replacement of the battery.

US 2012/018235 A1 discloses a mining vehicle.

### SUMMARY

Despite known solutions in the field, it would be desirable to develop a mining vehicle and a method for replacing a battery in the vehicle, which overcomes or alleviates at least some of the drawbacks of the prior art.

An object of the present invention is thus to achieve an advantageous mining vehicle, which is electrically driven and which enables an easier, more accurate and safer replacement of a battery. Another object of the present invention is to achieve a mining vehicle, which enables a battery to be safely and fixedly arranged. Furthermore, an object of the present invention is to achieve a mining vehicle, which is robust and user-friendly.

The herein mentioned objects are achieved by a mining vehicle, a battery for such a mining vehicle, and a method for replacing a battery in a mining vehicle according to the independent claims.

Hence, according to an aspect of the present invention, a mining vehicle with a powertrain configured for electric propulsion is provided. The powertrain comprises a battery removably arranged to supply power for propulsion of the vehicle and/or for performing mining operations, the vehicle comprising: a battery compartment configured to accommodate the battery; guiding elements arranged in the compartment to guide the battery into position; at least one locking device arranged in the compartment to lock the battery and limit vertical movement of the battery in the compartment; and holding elements arranged in the compartment to limit horizontal movement of the battery in the compartment.

According to another aspect of the invention, a battery for power supply for propulsion of a mining vehicle and/or for performing mining operations is provided, the battery being configured to be removably arranged in a battery compartment of a mining vehicle as disclosed herein.

According to yet another aspect of the present invention, a method for replacing a battery in a mining vehicle with a powertrain configured for electric propulsion is provided. The battery is arranged to supply power for propulsion of the vehicle and/or for performing mining operations, the vehicle comprising a battery compartment configured to accommodate the battery; guiding elements arranged in the compartment to guide the battery into position; at least one locking device arranged in the compartment to lock the battery in the compartment and limit vertical movement of the battery in the compartment; and holding elements arranged in the compartment to limit horizontal movement of the battery in the compartment. The method comprises: attaching a lifting arrangement to the battery; deactivating the at least one locking device to unlock the battery from the compartment; lifting the battery out of the battery compartment by means of the lifting arrangement, including lifting the battery in a substantially vertical direction whereby the battery is guided by the guiding elements; arranging a replacement battery in the battery compartment by means of the lifting arrangement lowering the replacement battery into position guided by the guiding elements; and activating the at least one locking device to lock the battery to the battery compartment.

An electrically driven mining vehicle comprising a battery for power supply will sooner or later need charging of the battery. With a removably arranged battery, the battery can be removed from the vehicle and be charged at a charging station. A replacement battery can thereby be arranged in the vehicle while the other battery is being charged. Replacing the discharged battery with another charged battery will only require a short break from production and the mining vehicle will thereby faster be able to continue its operation. Replacement of a battery may be performed in an environment where the mining vehicle is positioned on an uneven ground, which would seriously complicate the replacement. However, with guiding elements in the battery compartment, installing/inserting/mounting/arranging a battery in the battery compartment will be facilitated. Also, the guiding elements may help when removing the battery from the battery compartment. The combination of the holding elements and the at least one locking device limits/reduces or prevents movement in X-, Y-, and Z-direction and thereby ensures that the battery is fixedly and safely attached in the battery compartment.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates a mining vehicle according to an example of the invention;
- Figure 2a-c: schematically illustrate details of a mining vehicle according to an example of the invention;
- Figure 3: schematically illustrates a battery according to an example of the invention;
- Figure 4a-c: schematically illustrate details of a mining vehicle according to examples of the invention;
- Figure 5a-b: schematically illustrate details of a mining vehicle according to an example of the invention;
- Figure 6: schematically illustrate details of a mining vehicle according to an example of the invention; and
- Figure 7: illustrates a flow chart for a method according to an example.

### DETAILED DESCRIPTION

To achieve an environment-friendly mining vehicle with a robust and safe battery arrangement, which enables a quick, easy and safe replacement of the battery, a mining vehicle according to the present disclosure has been developed. The present disclosure is applicable on all sorts of mining vehicles. The disclosure may relate to underground mining vehicles, such as trucks, drilling rigs, haulers, loaders or support vehicles for mining related activities.

Hence, according to an aspect of the present disclosure, a mining vehicle with a powertrain configured for electric propulsion is provided. The powertrain comprises a battery removably arranged to supply power for propulsion of the vehicle and/or for performing mining operations. The vehicle comprises: a battery compartment configured to accommodate the battery; guiding elements arranged inside the compartment to guide the battery into position; at least one locking device arranged inside the compartment to lock the battery and limit vertical movement of the battery in the compartment; and holding elements arranged inside the compartment to limit horizontal movement of the battery in the compartment.

The basic function of electric propulsion of a vehicle is considered to be known and will not be described in detail herein. Furthermore, directional references, such as vertical and horizontal, are directions in relation to a bottom of the battery compartment. The bottom of the battery compartment is suitably essentially parallel with the ground on which the mining vehicle is standing. Thus, a vertical direction may refer to a direction essentially perpendicular to the bottom of the battery compartment. A horizontal direction may likewise refer to a direction essentially in parallel with the bottom of the battery compartment.

The at least one locking device may be configured to reduce or prevent vertical movement of the battery in relation to the battery compartment. By limiting the vertical movement of the battery means reducing the vertical movement or even preventing vertical movement. It is to be understood that the purpose of the at least one locking device is to achieve as little vertical movement as possible. The at least one locking device may thus be configured to limit/reduce or prevent movement in Z direction. The holding elements may be configured to reduce or prevent horizontal movement of the battery in relation to the battery compartment. By limiting horizontal movement of the battery means reducing the horizontal movement or even preventing horizontal movement. It is to be understood that the purpose of the holding elements is to achieve as little horizontal movement as possible. The holding elements may thus be configured to limit/reduce or prevent movement in X or Y direction. The guiding elements, the at least one locking device and the holding elements may be separate parts. Thus, the guiding elements, the holding elements and the at least one locking device may be different components/units of the mining vehicle. Alternatively, the holding elements and the at least one locking device may form a single unit. The holding elements may thus be integrated in the at least one locking device.

The battery may comprise a top wall, a bottom wall and at least four side walls. The battery compartment may comprise a bottom configured to receive and support the battery. Thus, when the battery is arranged in correct position in the battery compartment, at least a part of the battery bottom wall may abut the bottom of the battery compartment. The battery compartment may form part of the vehicle chassis. The battery compartment may have a shape corresponding to the shape of the battery. The battery may comprise at number of lifting elements configured to interact with a lifting arrangement. The lifting elements may comprise loops or lifting eyes. Alternatively, the lifting elements comprises protrusions or pivots configured to interact with a lifting arrangement. The lifting elements may be arranged at the top wall of the battery. As an example, the battery comprises three lifting elements. The lifting elements may be arranged to balance the battery and keep the battery straight while lifting it out of or into the battery compartment.

According to an example, the at least one locking device is configured to interact with a locking part of the battery to achieve the locking. The at least one locking device may be configured to interact with a locking part at a bottom wall of the battery to achieve the locking. The at least one locking device may thus be arranged at the bottom of the battery compartment. This way, the bottom of the battery may be locked to the bottom of the battery compartment. The bottom of the battery may thus be locked to the vehicle chassis. The at least one locking device may be configured to interact with at least one locking part of the battery. Thus, the at least one locking device may be configured to interact with a plurality of locking parts of the battery. With one locking device, the battery may thereby be locked to the compartment at a plurality of locking points. The locking parts of the battery may protrude from the bottom wall of the battery. The battery compartment may comprise a corresponding recess or hole configured to receive the locking part of the battery. The recess or hole may be formed in the bottom of the battery compartment. The at least one locking device is suitably arranged in association with the recess/hole in the bottom of the battery compartment. When the battery is arranged in correct position, the locking part of the battery may extend through the hole in the bottom of the battery compartment, to where the at least one locking device is arranged. It is to be understood that the locking part of the battery and the at least one locking device of the mining vehicle are correspondingly arranged. The mining vehicle may comprise at least two locking devices. The battery may comprise at least two locking parts.

The locking part of the battery may comprise a loop or eye configured to interact with the at least one locking device. Alternatively, the locking part of the battery may comprise a recess or cavity, configured to interact with the at least one locking device.

According to an example, the holding elements are configured to interact with holding parts of the battery to limit horizontal movement of the battery. The holding elements may be configured to interact with holding parts at a bottom wall of the battery, to limit horizontal movement of the battery. The battery may thus comprise holding parts at the bottom wall. The holding parts may protrude from the bottom wall of the battery. The holding elements may be arranged at the bottom of the battery compartment. The holding elements may comprise recesses in the bottom of the battery compartment. The recesses may be configured to receive corresponding protruding holding parts of the battery. Suitably, the holding elements are configured to automatically interact with the holding parts of the battery when the battery is arranged in correct position. The protruding holding parts of the battery may be configured to resist/withstand the shearing forces incurred by lateral/horizontal movement of the battery and thus prevent or limit/reduce horizontal movement of the battery in the compartment when interacting with the holding elements. Alternatively, the holding elements may comprise protruding elements configured to interact with corresponding recesses in the battery. Such protruding holding elements may be configured to resist/withstand the shearing forces incurred by lateral/horizontal movement and thus prevent or limit/reduce horizontal movement of the battery in the compartment. The mining vehicle may comprise any number of holding elements. The mining vehicle may comprise at least two holding elements. The holding elements may be arranged substantially centrally in the battery compartment. The holding elements may be symmetrically arranged in the battery compartment. It is to be understood that the holding parts of the battery and the holding elements of the mining vehicle are correspondingly arranged.

The battery may also comprise support elements, such as feet or support legs. The support elements may be arranged at the bottom wall of the battery. The support elements may be configured to ensure a gap between the bottom wall of the battery and the ground/surface on which the support elements are resting. This way, the locking parts and holding parts can protrude from the bottom wall without touching the ground/surface. The support elements and the created gap between the bottom wall of the battery and the ground/surface may also enable the use of a fork truck or similar to lift the battery.

According to another example, the guiding elements are configured to interact with guiding parts of the battery. The guiding elements may be configured to interact with guiding parts on side walls of the battery. The battery may thus comprise corresponding guiding parts on some or all side walls. The guiding elements may be arranged on side walls of the battery compartment. The guiding elements may thus be arranged to surround the battery circumferentially. The guiding parts of the battery and the guiding elements of the mining vehicle may be configured to allow the battery to slide along the guiding elements. The guiding elements may further be configured to restrict movement of the battery laterally in relation to the guiding elements.

The locking parts, the holding parts and the guiding parts of the battery may be separate parts. Thus, the locking parts, the holding parts and the guiding parts may be different components/units of the battery. Alternatively, a locking part and a holding part may form a single unit. Thus, a locking part and a holding part may be integrated in one component.

The guiding elements and the guiding parts of the battery may be configured to allow a gap between the guiding means and the guiding parts when the battery is arranged in the compartment. Because of the gap between the guiding elements and the guiding parts/battery, the guiding elements do not have to be configured to resist/withstand a dynamic load. The guiding elements may thus not be very robust or durable. The configuration of the guiding elements and the guiding parts thus results in relatively big tolerances for the battery also when the battery is arranged in the battery compartment. This way, the guiding elements do not need to be configured to resist or support the weight of the battery to thereby hold the battery in place during operation of the vehicle.

The guiding elements may comprise vertical guides. The guiding elements may thus be arranged to extend longitudinally essentially perpendicularly to the bottom of the battery compartment. The guiding elements may thereby be configured to induce/require a substantially vertical movement of the battery when installing/removing the battery in/from the battery compartment. The guiding elements may extend from the bottom of the battery compartment and along at least a part of the height of the battery compartment. The longitudinal extension of the guiding elements may be referred to as the length of the guiding elements. The length of the guiding elements may correspond to the height of the battery. In this case, the battery will have to be lifted essentially vertically to be removed from the battery compartment. Alternatively, the length of the vertical guiding elements is shorter than the height of the battery. As an example, the battery may then be removed from the battery compartment by first lifting it essentially vertically along the guiding elements, and then moving the battery horizontally. The guiding elements may be attached to the frame/chassis of the mining vehicle. The guiding elements may further be configured to protect components of the mining vehicle. Thus, when the guiding elements are attached to the frame/chassis of the mining vehicle, they may function as protective cover for some components of the mining vehicle. The mining vehicle may comprise at least three guiding elements. At least two of the mining elements may be arranged in association with different side walls of the battery. The guiding elements may be arranged in association with corners of the battery. The guiding elements may be symmetrically arranged around the battery to increase stability when guiding the battery into position.

The mining vehicle may comprise a guiding framework. The guiding elements may be comprised in such guiding framework. The guiding framework may be arranged in the battery compartment to guide the battery into position. The guiding framework may comprise horizontal guides interconnecting at least two guiding elements. This way, the guiding framework is configured to guide the battery vertically and horizontally. The guiding framework may thus guide the battery when the battery is inserted in the battery compartment from above and when the battery is inserted from the side of the mining vehicle.

According to an example, the guiding elements may comprise guide rails configured to interact with protruding guiding parts of the battery. The guiding parts of the battery may comprise parts protruding from the side walls of the battery. When arranging the battery in the battery compartment, the protruding guiding parts may be partly surrounded by the guide rails and the battery is thereby guided into position. The guide rails may be essentially U-shaped to form a passage for the guiding parts of the battery. The guide rails interacting with the protruding guiding parts of the battery may thereby restrict lateral movement of the battery in relation to the guide rails when arranging the battery in the battery compartment. The protruding guiding parts of the battery may comprise protruding pucks or blocks. The guiding parts may alternatively comprise rails configured to fit with the guide rails in the battery compartment. The guiding elements of the mining vehicle may alternatively comprise sliding surfaces configured to interact with guiding parts of the battery. The guiding parts of the battery may comprise corners of the battery. The corners of the battery may be defined as the projecting angles of the battery, or the place where the side walls of the battery meet. The guiding parts may also comprise reinforced surfaces, such as wear plates or similar, arranged at the corners for protection.

According to an example, the guiding elements comprise a top portion and a main portion, wherein the top portion is tapered towards the main portion. The guiding elements may thus each comprise a top portion being wider at the top end and being tapered in direction towards the main portion. The top portion may thus be tapered in direction towards the bottom of the battery compartment.

This way, mounting of the battery in the battery compartment is facilitated. With a wider top portion, it will be easier to align the guiding parts of the battery with the guiding elements. This way, the guiding elements ensure easy arrangement of a battery also when the mining vehicle is standing on uneven ground and is tilting. The top portion may further be inclined outwardly in relation to the main portion and the battery. Suitably, in the event that the guiding elements comprise some sort of guide rail, the top portion may be inclined outwardly in relation to the main portion and the battery. Outwardly refers to a direction away from the battery compartment and the battery. The top portion may thus be somewhat funnel-shaped. This further facilitates arranging the battery in the battery compartment.

According to an example, the at least one locking device comprises a lock portion configured to move between a locked position and an unlocked position. The lock portion of the at least one locking device may be configured to be in engagement with at least one locking part of the battery when being in the locked position. Similarly, the lock portion may be configured to not be in engagement with any locking part of the battery when being in the unlocked position. The locking device may comprise an actuator device for moving the lock portion. The actuator device may be hydraulic, pneumatic, mechanical or electric. Such actuator device may thus comprise a hydraulic cylinder, an electrical motor, a rack and pinion arrangement or similar. The actuator device may be connected to a control unit. The at least one locking device may thus comprise a control unit arranged to control movement of the lock portion. The control unit may be configured to control a plurality of actuator devices and thus a plurality of locking devices.

The lock portion of the at least one locking device may be configured to move linearly between a locked position and an unlocked position. The lock portion may comprise a locking pin, cotter or similar. In the event that the locking part of the battery is a loop or eye, the lock portion may be inserted in the loop/eye when being in the locked position. It is to be understood that the linear movement of the lock portion may be achieved manually or automatically. Thus, the at least one locking device may be locked/unlocked either manually or automatically.

The lock portion may be spring loaded. The at least one locking device may thus comprise a spring arranged in association with the lock portion. The lock portion and the spring may be arranged inside a cylinder. The spring may be a coil spring or helical spring configured for tension or extension. In one example, the at least one locking device is configured, such that the spring force should be overcome when unlocking the at least one locking device. Thus, to linearly move the lock portion to the unlocked position, a load larger than the spring force must be applied on the lock portion. When removing the load on the spring, the spring will automatically return to its unloaded state. The lock portion will thereby automatically move to the locked position. In order for the spring loaded lock portion to stay in the unlocked position, a rotational movement of the lock portion may be required. In one example, to unlock the at least one locking device, the lock portion is first moved linearly away from the locking parts of the battery. Subsequently the lock portion is rotated in a first direction about 20-60 degrees, whereby a support element of the at least one locking device retains the lock portion in the unlocked position. To lock the at least one locking device, the lock portion may first be rotated in a second direction, opposite to the first direction. After that, the spring force will automatically move the lock portion to the locked position.

According to an example, at least a part of the lock portion may be threaded, whereby the lock portion may be linearly moved by screwing/rotating the locking pin.

According to an example, the at least one locking device comprises a twist lock. Twist locks are commonly used for locking containers and comprises a male part configured to interact with a female part. Thus, the at least one locking device may comprise a male part and the locking part of the battery may comprise a female part. The at least one locking device may comprise a base portion and a lock portion. The lock portion may be rotatable in relation to the base portion. The at least one locking device may thus comprise a lock portion configured to rotate between a locked position and an unlocked position. The lock portion may be able to rotate 90 degrees. The female part may comprise a cavity or recess in association with the battery, configured to receive the male part. When the lock portion of the at least one locking device is rotated to the locked position, the lock portion will prevent or limit/reduce vertical movement of the battery in relation to the battery compartment. The battery is thereby locked to the battery compartment. The at least one locking device may be arranged at the bottom of the battery compartment. The locking part of the battery comprising the female part may be arranged in a support element (foot) of the battery. Alternatively, the locking part comprising the female part may be arranged in the bottom wall of the battery. The rotational movement of the lock portion may be achieved manually or automatically. The at least one locking device may thus be connected to a control unit for activating/deactivating the at least one locking device. The base portion and the lock portion may further be configured to limit/reduce or prevent horizontal movement of the battery in relation to the battery compartment. Thus, the at least one locking device may at the same time function as holding element. In this case, the at least one locking device and the holding element is integrated in one unit.

The at least one locking device may further comprise a manoeuvring means, arranged to be accessible from outside the vehicle for manual activation/deactivation of the at least one locking device. The manoeuvring means may be arranged on a side of the vehicle, such that an operator can access the manoeuvring means without stepping aboard/entering the vehicle. The manoeuvring means may be arranged on a longitudinal side of the vehicle. The manoeuvring means may comprise a handle, lever or similar. The manoeuvring means may be connected to the lock portion of the at least one locking device. Thus, applying a load on the manoeuvring means results in a load applied on the lock portion. In the event that the at least one locking device comprises a rotatable lock portion, moving the manoeuvring means will rotate the lock portion. In the event that the at least one locking device comprises a linearly movable lock portion, moving the manoeuvring means will move the lock portion linearly. Thus, by pulling the manoeuvring means in direction away from the vehicle, the lock portion will be linearly displaced to the unlocked position. The at least one locking device may be configured, such that the manoeuvring means is protruding from the vehicle when the at least one locking device is unlocked. This way, it is clearly indicated when the battery is not locked in the battery compartment. An operator of the mining vehicle will this way be aware about the situation and will make sure that the battery is locked before starting operation of the vehicle. The risk of operating the vehicle with an unlocked battery is thereby reduced. The manoeuvring means may be retracted inside the chassis when the at least one locking device is locked. The mining vehicle may thus comprise an opening in the chassis in association with the manoeuvring means, such that the manoeuvring means can be accessed from outside the vehicle. Alternatively, the manoeuvring means extends to the outside of the vehicle chassis irrespective of the locked or unlocked position. However, the manoeuvring means may in this case protrude further away from the chassis when the at least one locking device is unlocked.

According to an aspect of the present disclosure, a battery for power supply for propulsion of a mining vehicle and/or for performing mining operations is provided. The battery is configured to be removably arranged in a battery compartment of a mining vehicle as herein disclosed. The battery may comprise a locking part configured to interact with the at least one locking device of the mining vehicle. The battery may further comprise guiding parts configured to interact with the guiding elements of the mining vehicle. The battery may also comprise holding parts, configured to interact with the holding elements of the mining vehicle. The battery may have any shape. In one example, the battery has an L-shape. The battery compartment of the mining vehicle may have a shape corresponding to the shape of the battery. The battery may not be able to be removed from the battery compartment by only horizontal movement of the battery. The battery thus has to be lifted vertically at first, before any horizontal (lateral) movement is possible. The battery may have a weight between 1-10 tonnes. The battery may be interchangeable, and may be removed from the mining vehicle to be charged.

According to an aspect of the present disclosure, a method for replacing a battery in a mining vehicle with a powertrain configured for electric propulsion is provided. The battery is arranged to supply power for propulsion of the vehicle and/or for performing mining operations. The vehicle is configured as disclosed herein and comprises a battery compartment configured to accommodate the battery; guiding elements arranged in the compartment to guide the battery into position; at least one locking device arranged in the compartment to lock the battery in the compartment and limit vertical movement of the battery in the compartment; and holding elements arranged in the compartment to limit horizontal movement of the battery in the compartment. The method comprises: attaching a lifting arrangement to the battery; deactivating the at least one locking device to unlock the battery from the battery compartment; lifting the battery out of the battery compartment by means of the lifting arrangement, including lifting the battery in a substantially vertical direction, whereby the battery is guided by the guiding elements; arranging a replacement battery in the battery compartment by means of a lifting arrangement lowering the replacement battery into position guided by the guiding elements; and activating the at least one locking device to lock the replacement battery to the battery compartment.

Replacing a battery of a mining vehicle may be a complicated process, due to the mining environment being very harsh with high humidity, dirt, hard rock walls, low ceilings and uneven ground. The weight and shape of the battery may also complicate the process. Lifting the battery in and out of the compartment may thus be challenging. For example, the ceiling height restricts how high the battery can be lifted. Also, the uneven ground may complicate arranging the replacement battery in the compartment, since it may be difficult to get the battery in correct position by means of the lifting arrangement. It is desired to achieve replacement of a battery as quickly and easy as possible so that the vehicle can get back into operation. With the mining vehicle and method as disclosed herein, replacement of a battery can be achieved by one person or even autonomously. The guiding elements facilitates the mounting and reduces the risk of the battery getting stuck while mounting or removing the battery. The mining vehicle thus ensures a time-efficient and safe replacement of the battery.

Attaching a lifting arrangement to the battery may comprise attaching a lifting arrangement to lifting elements of the battery.

Deactivating the at least one locking device may be referred to as unlocking the at least one locking device. Activating the at least one locking device may thus be referred to as locking the at least one locking device. Deactivating the at least one locking device to unlock the battery from the battery compartment may comprise linearly displacing a lock portion from a locked position to an unlocked position. Alternatively, deactivating the at least one locking device may comprise rotating a lock portion to an unlocked position. Activating the at least one locking device to lock the battery to the battery compartment may comprise linearly displacing a lock portion from an unlocked position to a locked position or it may comprise rotating a lock portion from an unlocked position to a locked position. Deactivating and activating the at least one locking device may be performed manually or automatically. Automatic deactivation or activation of the at least one locking device may comprise controlling the at least one locking device by means of a control unit.

Lifting the battery out of the battery compartment may also comprise lifting the battery in a substantially horizontal direction. Lifting the battery out of the battery compartment may involve lifting the battery substantially vertically along the guiding means and subsequently move the battery horizontally/laterally. The method may optionally comprise positioning the replaced/removed battery offboard the mining vehicle. The removed battery may be positioned on another vehicle or on a charging station.

Arranging the replacement battery in the battery compartment may comprise positioning the replacement battery in the battery compartment, such that there is a gap between the guiding means and the replacement battery when the replacement battery is arranged in the compartment. When the lifting arrangement has lowered the replacement battery into position in the battery compartment, the holding elements will automatically interact with the holding parts of the replacement battery. Thus, arranging the replacement battery in the battery compartment may also comprise positioning the replacement battery, such that the holding parts of the replacement battery interacts with the holding elements of the battery compartment. The at least one locking device may subsequently be activated such that it interacts with the locking part of the replacement battery.

Arranging the replacement battery in the battery compartment may comprise attaching a lifting arrangement to the replacement battery. It is to be understood that the lifting arrangement used to lift and remove the battery in the battery compartment and the lifting arrangement used to arrange the replacement battery may be the same lifting arrangement or it may be two separate lifting arrangements.

According to an example, the mining vehicle comprises a first battery to be replaced and also an additional battery for transportation. Replacing the first battery may comprise attaching a first lifting arrangement to the first battery and lifting the first battery out of the battery compartment. The mining vehicle may subsequently move (by means of the additional battery) to a second lifting arrangement holding a replacement battery. The second lifting arrangement may then position the replacement battery in the battery compartment.

The method may further comprise electrically disconnecting the battery from the mining vehicle. The battery may be electrically disconnected by means of a switch and/or by disconnecting one or more connectors. This may be performed before lifting the battery out from the battery compartment or it may be performed simultaneously with lifting the battery out of the battery compartment. The battery may thus be electrically connected to the mining vehicle by means of connectors arranged at the bottom wall of the battery and at the bottom of the battery compartment. When the battery is lifted, the connection may automatically be disconnected. Similarly, the method may comprise electrically connecting the replacement battery to the mining vehicle. The replacement battery may be electrically connected by means of a switch and/or by connecting one or more connectors. In the event that the replacement of the battery is performed automatically, the method may further comprise verifying that the battery is electrically disconnected from the mining vehicle before deactivating the at least one locking device. Verifying that the battery is electrically disconnected may comprise receiving a verification signal from a sensor device. Furthermore, the method may comprise verifying that the replacement battery is locked to the battery compartment, and thus that the at least one locking device is activated, before electrically connecting the replacement battery to the mining vehicle.

The method may optionally comprise indicating for an operator of the mining vehicle that the at least one locking device is activated. This may be performed by means of the manoeuvring means not protruding from the mining vehicle. Alternatively, this may be performed by means of a sensor device arranged in association with the at least one locking device. The sensor device may identify when the at least one locking device is activated (locked) and may then send a signal to the control unit indicating that the at least one locking device is activated. The control unit may present information about the at least one locking device being activated on a display unit in the mining vehicle. This way, an operator of the mining vehicle is informed that the mining vehicle can be safely operated. In one example, the control unit may control the mining vehicle, such that it is not possible to operate the vehicle until the sensor device has signalled that the at least one locking device is activated.

The method may comprise replacing the battery from the front or the rear of the mining vehicle. The drifts in the mine may be narrow and the lack of space may make it impossible to unload the battery laterally in relation to the longitudinal direction of the mining vehicle. The battery may thus be lifted from the battery compartment and be moved in the longitudinal direction of the mining vehicle.

The present disclosure will now be further illustrated with reference to the appended figures.

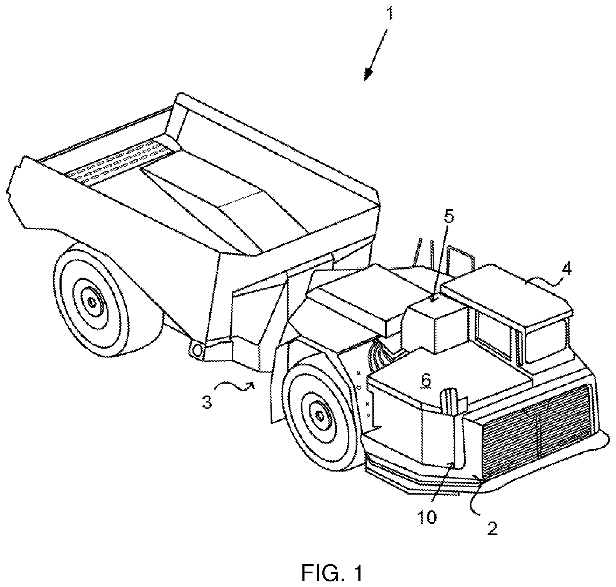

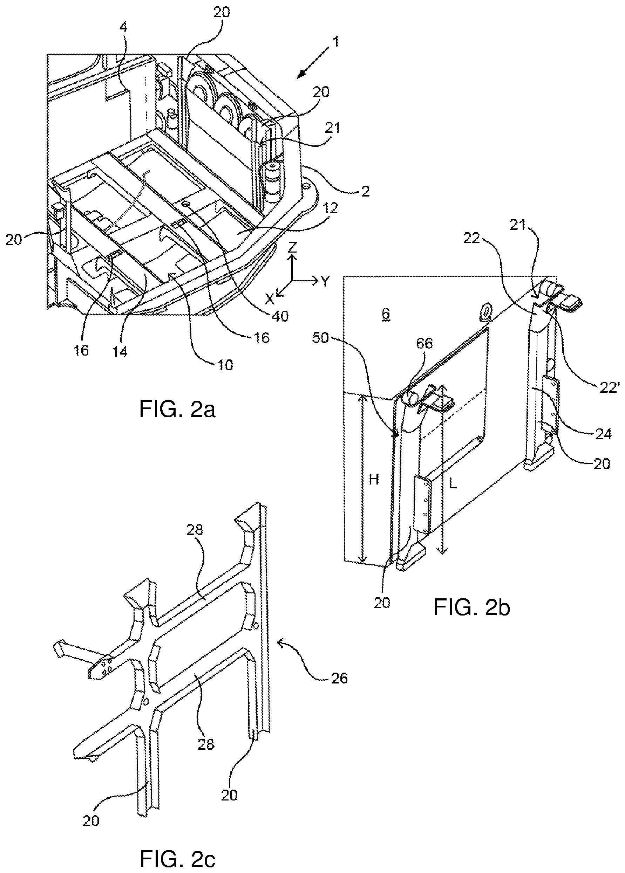

Figure 1 schematically illustrates a mining vehicle 1 according to an example. The mining vehicle 1 may be an underground mining vehicle, such as a truck, a drilling rig, a hauler or a loader. The mining vehicle 1 has a chassis 2 and a powertrain 3 configured for electric propulsion. The mining vehicle 1 may also comprise a cab 4. The powertrain 3 comprises a propulsion unit 5 and a battery 6. The battery 6 is arranged to supply power for propulsion of the mining vehicle 1 and/or for performing mining operations. The mining vehicle 1 comprises a battery compartment 10 configured to accommodate the battery 6. The mining vehicle 1 also comprises guiding elements arranged inside the battery compartment 10 to guide the battery 6 into position. Furthermore, the mining vehicle 1 comprises at least one locking device arranged to lock the battery 6 and limit vertical movement of the battery 6 in the compartment 10. The at least one locking device is thus arranged to limit movement in Z-direction. The mining vehicle 1 also comprises holding elements arranged inside the battery compartment 10 to limit horizontal movement of the battery 6 in the compartment 10. The holding elements are thus arranged to limit movement in X- and Y-direction. A three dimensional Cartesian coordinate system is shown in Figure 2a to illustrate the different directions. The guiding elements 20, the at least one locking device 30 and the holding elements 40 will be further described with regard to Figure 2a-c, Figure 4a-c, Figure 5a-b and Figure 6.

Figures 2a-2c schematically illustrates details of a mining vehicle according to an example. The mining vehicle 1 may be configured as disclosed in Figure 1.

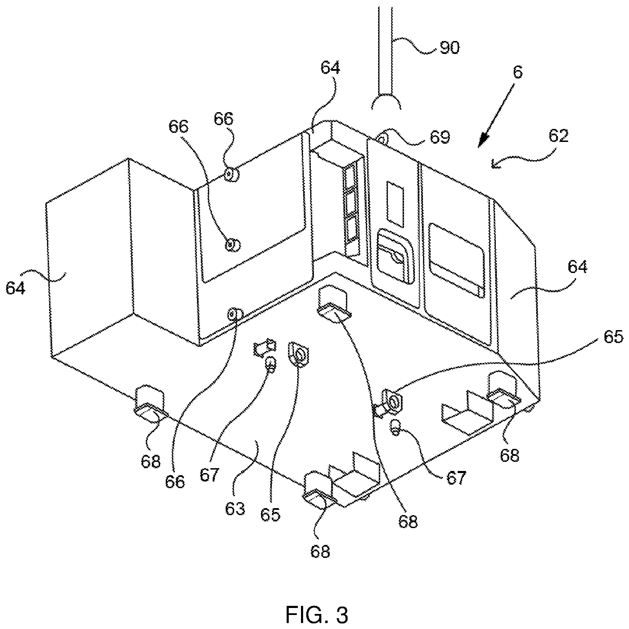

Figure 2a shows the battery compartment 10 without any battery 6 arranged therein. The battery compartment 10 comprises a bottom 12 configured to receive and support the battery 6. In this example, the bottom 12 comprises friction surfaces 14, such as rubber strips or similar. The friction surfaces 14 will further assist in limiting movement of the battery 6 in the compartment 10. The bottom 12 may form part of the chassis 2 of the mining vehicle 1. The compartment 10 may further be delimited by sides of the chassis 2 and/or the cab 4. The battery compartment 10 may comprise recesses or holes 16 in the bottom 12, for receiving locking parts of the battery 6. The battery 6 will be further described with regard to Figure 3. The figure further shows a holding element 40 configured to interact with a holding part of the battery 6. In this example, the holding element 40 comprises a recess in the bottom 12 of the battery compartment 10. The holding elements 40 of the mining vehicle 1 are configured to automatically interact with the holding parts of the battery 6 when the battery 6 is arranged in correct position.

Figure 2a also shows a plurality of guiding elements 20. The guiding elements 20 may be fixedly attached to the chassis 2. The guiding elements 20 are in this example arranged on the sides of the battery compartment 10. The guiding elements 20 may thus be arranged to surround the battery 6 circumferentially. The guiding elements 20 are configured to interact with guiding parts 66 of the battery 6. This is illustrated in Figure 2b.

The guiding elements 20 in this example comprises vertical guides. The guiding elements 20 thus extend longitudinally essentially perpendicularly to the bottom 12 of the battery compartment 10. The guiding elements 20 thereby induce/require a substantially vertical movement of the battery 6 when installing/removing the battery 6 in/from the battery compartment 10. In this figure, the guiding elements 20 extend from the bottom 12 of the battery compartment 10 and along the height of the battery compartment 10. However, the guiding elements 20 may extend only along a part of the height of the battery compartment 10.

As shown in Figure 2a and Figure 2b, the guiding elements 20 may comprise guide rails. The guide rails 20 are configured to interact with protruding guiding parts 66 of the battery 6. The guide rails 20 are essentially U-shaped to form a passage 21 for the guiding parts 66 of the battery 6.

Figure 2b schematically illustrates the guiding elements 20 in relation to a battery 6 arranged in the battery compartment 10. In this example, the length L of the guiding elements 20 corresponds to the height H of the battery 6.

In Figure 2b is also shown that the guiding elements 20 and the guiding parts 66 of the battery 6 are configured to allow a gap 50 between the guiding means 20 and the battery 6 when the battery 6 is arranged in the battery compartment 10.

The guiding elements 20 comprise a top portion 22 and a main portion 24, wherein the top portion 22 is tapered towards the main portion 24. The top portion 22 is wider at the top end 22' and is tapered in direction towards the main portion 24. The top portion 22 is thus tapered in direction towards the bottom 12 of the battery compartment 10. With a wider top portion 22, it will be easier to align the guiding parts 66 of the battery 6 with the guiding elements 20. The top portion 22 may further be inclined outwardly in relation to the main portion 24 and the battery 6.

Figure 2c schematically illustrates a guiding framework 26 comprised in the mining vehicle 1. In this figure, the guiding framework 26 comprises two guiding elements 20 as disclosed in Figure 2a and 2b. It is, however, to be understood that the guiding framework 26 may comprise any number of guiding elements 20. The guiding framework 26 may be arranged in the battery compartment 10 to guide the battery 6 into position. The guiding framework 26 also comprises horizontal guides 28 interconnecting the guiding elements 20. This way, the guiding framework 26 is configured to guide the battery 6 vertically and horizontally. The horizontal guides 28 may also comprise guide rails.

Figure 3 schematically illustrates a battery 6 according to an example. The battery 6 is configured for power supply for propulsion of a mining vehicle and/or for performing mining operations. The mining vehicle 1 associated with the battery 6 may be configured as disclosed in Figure 1. The battery 6 is configured to be removably arranged in a battery compartment 10 of the mining vehicle 1. The battery compartment 10 in which the battery 6 is configured to be arranged, may be configured as disclosed in Figure 2a. In this example, the battery 6 is substantially L-shaped. However, the battery 6 may have any shape.

The battery 6 comprises a top wall 62, a bottom wall 63 and at least four side walls 64. When the battery 6 is arranged in correct position in the battery compartment 10, at least a part of the battery bottom wall 63 may abut the bottom 12 of the battery compartment 10.

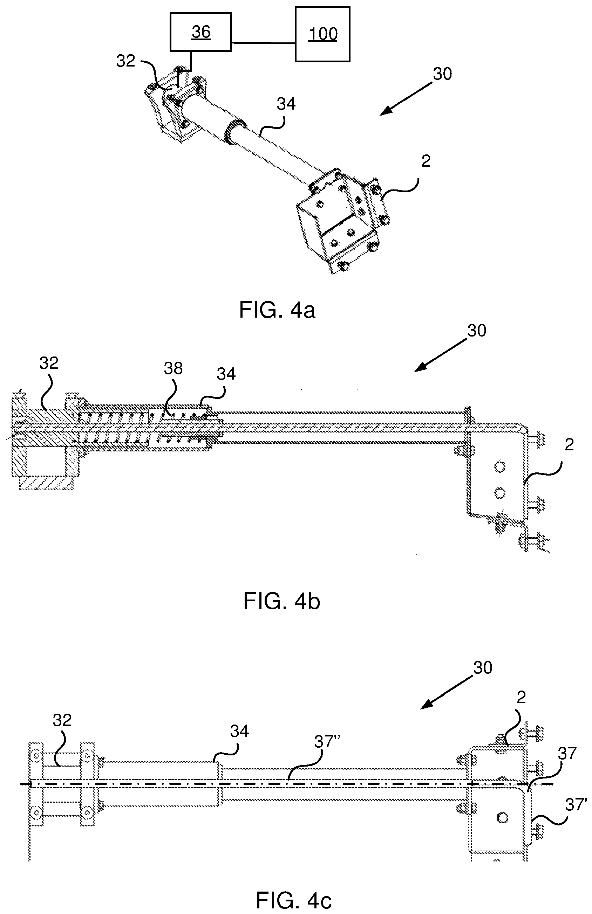

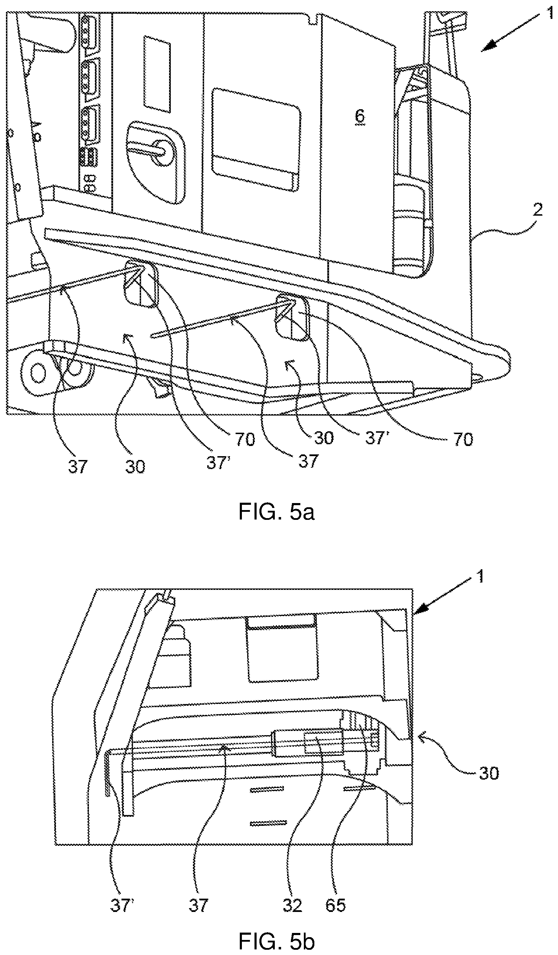

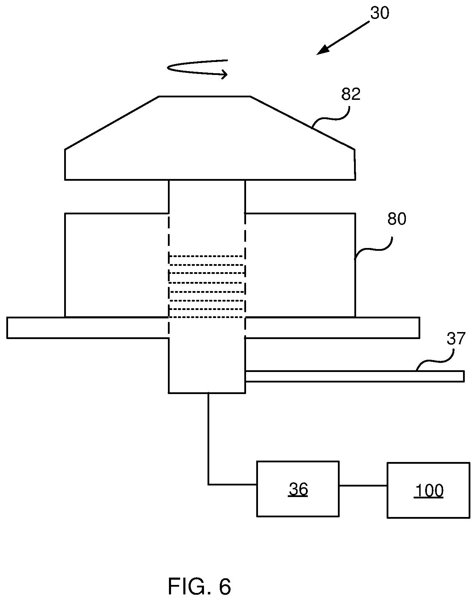

The battery 6 comprises at least one locking part 65 configured to interact with a locking device 30 of the mining vehicle 1. In this figure, the battery 6 comprises two locking parts 65 arranged at the bottom wall 63. This example shows the locking parts 65 comprising a loop or eye configured to interact with the locking device 30 as disclosed in Figures 4a-4c and Figure 5a-5b. The battery 6 may, however, comprise locking parts 65 configured to interact with the locking device 30 as disclosed in Figure 6. Depending on how the battery compartment 10 is configured, the locking parts 65 of the battery 6 may extend through holes 16 in the bottom 12 of the battery compartment 10 when the battery 6 is arranged in correct position. When the locking parts 65 interact with the locking devices 30, the battery 6 is prevented from moving in Z-direction in relation to the battery compartment 10.

The battery 6 further comprises guiding parts 66 configured to interact with the guiding elements 20 of the mining vehicle 1. The guiding parts 66 may be arranged on some or all side walls 64 of the battery 6. The guiding parts 66 are configured to slide along the guiding elements 20 in the battery compartment 10 and thereby guide the battery 6 into correct position. Here, the guiding parts 66 comprises protruding pucks.

The battery 6 also comprises holding parts 67, configured to interact with the holding elements 40 of the mining vehicle 1. In this example, the battery 6 comprises two holding parts 67. The holding parts 67 comprises holding pins protruding from the bottom wall 64 of the battery 6. The protruding holding parts 67 are configured to resist/withstand the shear forces incurred by lateral/horizontal movement of the battery 6. When the battery 6 is arranged in correct position, the holding parts 67 will be inserted into corresponding recesses 40 (holding elements) in the battery compartment 10. This way, the holding parts 67 and the holding elements 40 will prevent or limit/reduce movement of the battery 6 in the X- and Y-direction.

Furthermore, the battery 6 comprises support elements 68, such as feet or support legs. The support elements 68 are arranged at the bottom wall 64 of the battery. The support elements 68 are configured to ensure a gap between the bottom wall 64 of the battery 6 and the ground on which the support elements 68 are resting. This way, the locking parts 65 and holding parts 67 can protrude from the bottom wall 64 without touching the ground.

The battery 6 also comprises lifting elements 69. Figure 3 only shows one lifting element 69 but the battery 6 may comprise at least two lifting elements 69. The lifting elements 69 comprises lifting eyes or loops. The battery 6 may be lifted into and out of the battery compartment 10 by means of a lifting arrangement 90. The lifting arrangement 90 may thus be attached to the lifting elements 69 of the battery 6. The lifting arrangement 90 may comprise a crane, a robot arm or similar. Suitably, the lifting arrangement 90 comprises a hook or claw portion configured to interact with the lifting elements 69 of the battery 6.

Figure 4a schematically illustrates a locking device 30 of a mining vehicle 1 according to an example. The mining vehicle 1 may be configured as disclosed in Figure 1. The locking device 30 is configured for locking the battery 6 in the battery compartment 10 and thereby prevent movement of the battery 6 in Z-direction. The battery 6 may be configured as disclosed in Figure 3. The locking device 30 is configured to interact with the locking part 65 of the battery 6 to achieve the locking. The locking device 30 is suitably arranged at the bottom 12 of the battery compartment 10.

The locking device 30 comprises a lock portion 32 configured to move linearly between a locked position and an unlocked position. The lock portion 32 will hereby be referred to as a locking pin 32. The locking pin 32 is configured to be in engagement with the locking part 65 of the battery 6 (shown in Figure 3) when being in the locked position. The locking pin 32 may be movably arranged inside a cylinder 34. The cylinder 34 is fixedly attached to the chassis 2 of the mining vehicle 1.

The linear movement of the locking pin 32 may be achieved manually or automatically. The locking device 30 may comprise an actuator device 36 for moving the locking pin 32 linearly. The actuator device 36 may be hydraulic, pneumatic, mechanical or electric. Such actuator device 36 may thus comprise a hydraulic cylinder, an electrical motor, a rack and pinion arrangement or similar. The actuator device 36 may be connected to a control unit 100.

Figure 4b schematically illustrates a locking device 30 for a mining vehicle 1 according to an example. The locking device 30 may be configured as disclosed in Figure 4a. In this example, the locking pin 32 is spring loaded. The locking device 30 thus comprises a spring 38 arranged inside the cylinder 34. The spring 38 may be a coil spring or helical spring configured for tension or extension. To move the locking pin 32 linearly to the unlocked position, the spring force should be overcome. Thus, to linearly move the locking pin 32 to the unlocked position, a load larger than the spring force must be applied on the locking pin 32. When removing the load on the locking pin 32, the spring 38 will automatically return to its compressed/unloaded state. In order for the spring-loaded locking pin 32 to remain in the unlocked position, a rotational movement of the locking pin 32 may be required.

Figure 4c schematically illustrates a locking device 30 for a mining vehicle 1 according to an example. The locking device 30 may be configured as disclosed in Figure 4a or Figure 4b. In this example, the locking device 30 comprises a manoeuvring means 37 for manual manoeuvring of the locking device 30. The manoeuvring means 37 is connected to the locking pin 32. The manoeuvring means 37 is fixedly attached to the locking pin 32, such that linear movement of the manoeuvring means 37 results in linear movement of the locking pin 32. The manoeuvring means 37 may be essentially L-shaped. The manoeuvring means 37 may thus comprise a handle, lever or similar 37' and an elongated rod 37". The elongated rod 37" is connected to the locking pin 32. The elongated rod 37" is thus movably arranged inside the cylinder 34. Thus, by applying a load on the manoeuvring means 37 and pulling the manoeuvring means 37 to the right in the figure, the locking pin 32 will be displaced to the unlocked position.

Figure 5a and 5b schematically illustrates parts of a locking device 30 arranged in a mining vehicle 1 according to an example. The locking device 30 may be configured as disclosed in Figure 4c and the mining vehicle 1 may be configured as in Figure 1 or Figure 2a. Figure 5a shows a view from outside the mining vehicle 1, where a battery 6 is arranged in the battery compartment 10. The battery 6 may be configured as disclosed in Figure 3. In this example, the mining vehicle 1 comprises two locking devices 30. The manoeuvring means 37 of the locking devices 30 are arranged to be accessible from outside the vehicle 1 for manual actuation of the locking devices 30. Figure 5a shows openings 70 in the chassis 2 of the mining vehicle 1. The locking devices 30 are unlocked by pulling the manoeuvring means 37 outwards, away from the vehicle 1. Thus, the manoeuvring means 37 will protrude from the vehicle 1, through the openings 70, when the locking devices 30 are unlocked. The manoeuvring means 37 may be retracted inside the chassis 2 when the locking devices 30 are locked. Via the openings 70, the manoeuvring means 70 can be accessed from outside the mining vehicle 1 when the locking devices 30 are locked. As an example, the unlocked position of the locking pin 32 may be retained by means of rotating the manoeuvring means 37, such that the handles 37' of the manoeuvring means 37 rests against the outside of the chassis 2. This way, the chassis 2 will prevent the manoeuvring means 37 from moving inwards through the openings 70 and thus prevent the locking pin 32 from moving to the locked position.

Figure 5b shows a locking device 30 from underneath the mining vehicle 1. The locking device 30 is in the locked position where the locking pin 32 thus is in the locked position. The locking pin 32 is interacting with a locking part 65 of the battery 6 and in this example, the locking pin 32 is inserted through a hole of the locking part 65.

Figure 6 schematically illustrates a locking device 30 of a mining vehicle 1 according to an example. The locking device 30 may be associated with a mining vehicle 1 as disclosed in Figure 1 or Figure 2a. In this example, the locking device 30 is a twist lock and thus comprises a male part configured to interact with a female part 65 (locking part) of the battery 6. The locking device 30 comprises a base portion 80 and a lock portion 82. The lock portion 82 is rotatable in relation to the base portion 80. The lock portion 82 is configured to rotate between a locked position and an unlocked position. The lock portion 82 may be able to rotate 90 degrees. The locking part 65 of the battery 6 may in this case comprise a cavity or recess, configured to receive the lock portion. When the lock portion 82 of the at least one locking device 30 is rotated to the locked position, the lock portion 82 will prevent or limit/reduce vertical movement of the battery 6 in relation to the base portion 80. The base portion 80 of the at least one locking device 30 may be arranged at the bottom 12 of the battery compartment 10. The rotational movement of the lock portion 82 may be achieved manually or automatically. The locking device 30 may comprise an actuator device 36 for moving the lock portion 82. The actuator device 36 may be hydraulic, pneumatic, mechanical or electric. Such actuator device 36 may thus comprise a hydraulic cylinder, an electrical motor, a rack and pinion arrangement or similar. The actuator device 36 may be connected to a control unit 100. The at least one locking device 30 may thus be connected to a control unit 100 for activating/deactivating the at least one locking device 30. The base portion 80 and the lock portion 82 may also be configured to limit/reduce or prevent horizontal movement of the battery 6 in relation to the battery compartment 10. Thus, the at least one locking device 30 may at the same time function as holding element 40.

The at least one locking device 30 may further comprise a manoeuvring means 37, arranged to be accessible from outside the vehicle 1 for manual activation/deactivation of the at least one locking device 30. The manoeuvring means 37 may comprise a lever or similar. The manoeuvring means 37 may be connected to the lock portion 82, so that moving the manoeuvring means 37 will rotate the top portion 82.

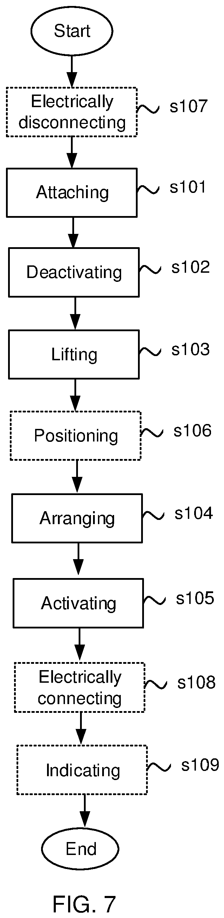

Figure 7 illustrates a flow chart for a method for replacing a battery 6 in a mining vehicle according to an example. The mining vehicle 1 has a powertrain configured for electric propulsion. The method may thus be applied on a mining vehicle 1 as disclosed in Figure 1 or Figure 2a and a battery 6 as disclosed in Figure 3. The battery 6 is arranged to supply power for propulsion of the mining vehicle 1 and/or for performing mining operations. The mining vehicle 1 comprises a battery compartment 10 configured to accommodate the battery 6; guiding elements 20 arranged in the compartment 10 to guide the battery 6 into position; at least one locking device 30 arranged in the compartment 10 to lock the battery 6 in the compartment and limit vertical movement of the battery 6 in the compartment 10; and holding elements 40 arranged in the compartment 10 to limit horizontal movement of the battery 6 in the compartment 10. The battery 6 is removably arranged in the compartment 10. The method comprises: attaching s101 a lifting arrangement 90 to the battery 6; deactivating s102 the at least one locking device 30 to unlock the battery 6 from the battery compartment 10; lifting s103 the battery 6 out of the battery compartment 10 by means of the lifting arrangement 90, including lifting the battery 6 in a substantially vertical direction, whereby the battery 6 is guided by the guiding elements 20; arranging s104 a replacement battery 6 in the battery compartment 10 by means of a lifting arrangement 90 lowering the replacement battery 6 into position guided by the guiding elements 20; and activating s105 the at least one locking device 30 to lock the replacement battery 6 to the battery compartment 10.

The step of attaching s101 a lifting arrangement 90 to the battery may comprise attaching a lifting arrangement 90 to lifting elements 69 of the battery 6. The lifting arrangement 90 may comprise a crane, a robot arm or similar. Suitably, the lifting arrangement 90 comprises a hook or claw portion configured to be attached the lifting elements 69 of the battery 6.

The step of deactivating s102 the at least one locking device 30 may comprise linearly displacing a lock portion 32 from a locked position to an unlocked position. Alternatively, deactivating s102 the at least one locking device 30 may comprise rotating a lock portion 82 to an unlocked position. Activating s105 the at least one locking device 30 to lock the battery 6 to the battery compartment 10 may comprise linearly displacing a lock portion 32 from an unlocked position to a locked position or it may comprise rotating a lock portion 82 from an unlocked position to a locked position. Deactivating s102 and activating s105 the at least one locking device 30 may be performed manually or automatically. Automatic deactivation or activation of the at least one locking device 30 may comprise controlling the at least one locking device 30 by means of a control unit 100.

The step of lifting s103 the battery 6 out of the battery compartment 10 may also comprise lifting the battery 6 in a substantially horizontal direction. Lifting s103 the battery 6 out of the battery compartment 10 may involve lifting the battery 6 substantially vertically along the guiding means 20 and subsequently move the battery 6 horizontally/laterally.

The method may optionally comprise positioning s106 the replaced/removed battery 6 offboard the mining vehicle 1. The battery 6 may be positioned s106 on another vehicle or on a charging station.

The step of arranging s104 the replacement battery 6 in the battery compartment 10 may comprise positioning the replacement battery 6 in the battery compartment 10, such that there is a gap 50 between the guiding means 20 and the replacement battery 6 when the replacement battery 6 is arranged in the compartment 10. Arranging s104 the replacement battery 6 in the battery compartment 10 may also comprise positioning the replacement battery 6, such that the holding parts 67 of the replacement battery 6 interacts with the holding elements 40 in the battery compartment 10.

The step of arranging s104 the replacement battery 6 in the battery compartment 10 may further comprise attaching a lifting arrangement 90 to the replacement battery 6.

The method may further comprise electrically disconnecting s107 the battery 6 from the mining vehicle 1. The battery 6 may be electrically disconnected s107 by means of a switch and/or by disconnecting one or more connectors. This may be performed before lifting s103 the battery 6 out from the battery compartment 10 or it may be performed simultaneously with lifting s103 the battery 6 out of the battery compartment 10. When the battery 6 is lifted s103, the electrical connection between the battery 6 and the vehicle 1 may automatically be disconnected.

The method may also comprise electrically connecting s108 the replacement battery 6 to the mining vehicle 1. The replacement battery 6 may be electrically connected s108 by means of a switch and/or by connecting one or more connectors.

The method may optionally comprise indicating s109 for an operator of the mining vehicle 1 that the at least one locking device 30 is activated. This may be performed by means of the manoeuvring means 37 not protruding from the mining vehicle 1. Alternatively, this may be performed by means of a sensor device arranged in association with the at least one locking device 30. The sensor device may identify when the at least one locking device 30 is activated (locked) and may then send a signal to the control unit 100 indicating that the at least one locking device 30 is activated. The control unit 100 may present information about the at least one locking device 30 being activated on a display unit in the mining vehicle 1. In one example, the control unit 100 may control the mining vehicle 1, such that it is allowed to operate the mining vehicle 1 only if the sensor device has signalled that the at least one locking device 30 is activated.

The method may comprise replacing the battery 6 from the front or the rear of the mining vehicle 1. The battery 6 may thus be lifted s103 from the battery compartment 10 and be moved in the longitudinal direction of the mining vehicle 1.

The foregoing description of the preferred embodiments of the present invention is provided for illustrative and descriptive purposes. It is not intended to be exhaustive or to restrict the invention to the variants described. Many modifications and variations will obviously be apparent to one skilled in the art without departing from the scope of the invention as defined in the appended claims.

The embodiments have been chosen and described in order best to explain the principles of the invention and its practical applications and hence make it possible for specialists to understand the invention for various embodiments and with the various modifications appropriate to the intended use.

## Claims

1. A mining vehicle (1) with a chassis (2) and a powertrain (3) configured for electric propulsion, the powertrain (3) comprising a battery (6) removably arranged to supply power for propulsion of the vehicle (1) and/or for performing mining operations, the vehicle (1) comprising:
a battery compartment (10) configured to accommodate the battery (6), the battery compartment (10) comprising a bottom (12) configured to receive and support the battery (6), and the battery compartment (10) forming part of the chassis (2);
guiding elements (20) arranged in the battery compartment (10) to guide the battery (6) into position;
at least one locking device (30) arranged to lock the battery (6) and limit vertical movement of the battery (6) in the battery compartment (10); and
holding elements (40) arranged in the battery compartment (10) to limit horizontal movement of the battery (6) in the battery compartment (10), wherein the at least one locking device (30) is arranged at the bottom (12) of the battery compartment (10) and is configured to interact with a locking part (65) at a bottom of the battery (6) to achieve the locking.

2. The mining vehicle (1) according to claim 1, wherein the holding elements (40) are configured to interact with holding parts (67) of the battery (6), to limit horizontal movement of the battery (6).

3. The mining vehicle (1) according to any one of the preceding claims, wherein the guiding elements (20) are configured to interact with guiding parts (66) of the battery (6).

4. The mining vehicle (1) according to claim 3, wherein the guiding elements (20) and the guiding parts (66) are configured to allow a gap (50) between the guiding elements (20) and the guiding parts (66) when the battery (6) is arranged in the battery compartment (10).

5. The mining vehicle (1) according to any one of the preceding claims, wherein the guiding elements (20) are vertical guides.

6. The mining vehicle (1) according to any one of the preceding claims, wherein the guiding elements (20) comprises guide rails configured to interact with protruding guiding parts (66) of the battery (6).

7. The mining vehicle (1) according to any one of the preceding claims, wherein the guiding elements (20) comprises a top portion (22) and a main portion (24), wherein the top portion (22) is tapered towards the main portion (24).

8. The mining vehicle (1) according to claim 7, wherein the top portion (22) of the guiding elements (20) is inclined outwardly in relation to the main portion (24) and the battery (6).

9. The mining vehicle (1) according to any one of the preceding claims, wherein the at least one locking device (30) comprises a lock portion (32) configured to move linearly between a locked position and an unlocked position.

10. The mining vehicle (1) according to claim 9, wherein the lock portion (32) is spring loaded.

11. The mining vehicle (1) according to any one of claim 1-8, wherein the at least one locking device (30) comprises a rotatable lock portion (82)

12. The mining vehicle (1) according to any one of claims 9-11, wherein the at least one locking device (30) comprises an actuator device (36) for moving the lock portion (32; 82).

13. The mining vehicle (1) according to any one of the preceding claims, wherein the at least one locking device (30) comprises a manoeuvring means (37), arranged to be accessible from outside the vehicle (1) for manual actuation of the at least one locking device (30).

14. A battery (6) for power supply for propulsion of a mining vehicle (1) and/or for performing mining operations, the battery (6) being configured to be removably arranged in a battery compartment (10) of a mining vehicle (1) according to any one of the preceding claims.

15. A method for replacing a battery (6) in a mining vehicle (1) with a chassis (2) and a powertrain (3) configured for electric propulsion, the battery (6) being removably arranged to supply power for propulsion of the vehicle (1) and/or for performing mining operations, the vehicle (1) comprising a battery compartment (10) configured to accommodate the battery (6), the battery compartment (10) comprising a bottom (12) configured to receive and support the battery (6), and the battery compartment (10) forming part of the vehicle chassis (2); guiding elements (20) arranged in the battery compartment (10) to guide the battery (6) into position; at least one locking device (30) arranged in the battery compartment (10) to lock the battery (6) and limit vertical movement of the battery (6) in the battery compartment (10); and holding elements (40) arranged in the battery compartment (10) to limit horizontal movement of the battery (6) in the battery compartment (10), wherein the at least one locking device (30) is arranged at the bottom (12) of the battery compartment (10) and is configured to interact with a locking part (65) at a bottom wall (63) of the battery (6) to achieve the locking, the method comprising:
attaching (s101) a lifting arrangement (90) to the battery (6);
deactivating (s102) the at least one locking device (30) to unlock the battery (6) from the battery compartment (10);
lifting (s103) the battery (6) out of the battery compartment (10) by means of the lifting arrangement (90), including lifting the battery (6) in a substantially vertical direction, whereby the battery (6) is guided by the guiding elements (20);
arranging (s104) a replacement battery (6) in the battery compartment (10) by means of a lifting arrangement (90) lowering the replacement battery (6) into position guided by the guiding elements (20; and
activating (s105) the at least one locking device (30) to lock the battery (6) to the battery compartment (10).

## Patentansprüche

1. Bergbaufahrzeug (1) mit einem Fahrgestell (2) und einem Antriebsstrang (3), der konfiguriert ist für elektrischen Antrieb, wobei der Antriebsstrang (3) eine Batterie (6) umfasst, die herausnehmbar angeordnet ist, um Leistung zum Antreiben des Fahrzeugs (1) und/oder zum Durchführen von Bergbauoperationen abzugeben, wobei das Fahrzeug (1) Folgendes umfasst:
einen Batterieraum (10), der so konfiguriert ist, dass er die Batterie (6) unterbringt, wobei der Batterieraum (10) einen Boden (12) umfasst, der so konfiguriert ist, dass er die Batterie (6) aufnimmt und trägt, und der Batterieraum (10) Teil des Fahrgestells (2) ist;
Führungselemente (20), die in dem Batterieraum (10) angeordnet sind, um die Batterie (6) in Stellung zu führen;
mindestens eine Verriegelungsvorrichtung (30), die so angeordnet ist, dass sie die Batterie (6) verriegelt und vertikale Bewegung der Batterie (6) im Batterieraum (10) einschränkt; und Halteelemente (40), die im Batterieraum (10) so angeordnet sind, dass sie horizontale Bewegung der Batterie (6) im Batterieraum (10) einschränken, wobei die mindestens eine Verriegelungsvorrichtung (30) am Boden (12) des Batterieraums (10) so angeordnet ist und so konfiguriert ist, dass sie mit einem Verriegelungsteil (65) am Boden der Batterie (6) interagiert, um das Verriegeln zu erreichen.

2. Bergbaufahrzeug (1) nach Anspruch 1, wobei die Halteelemente (40) so konfiguriert sind, dass sie mit Halteteilen (67) der Batterie (6) interagieren, um horizontale Bewegung der Batterie (6) einzuschränken.

3. Bergbaufahrzeug (1) nach einem der vorstehenden Ansprüche, wobei die Führungselemente (20) so konfiguriert sind, dass sie mit Führungsteilen (66) der Batterie (6) interagieren.

4. Bergbaufahrzeug (1) nach Anspruch 3, wobei die Führungselemente (20) und die Führungsteile (66) so konfiguriert sind, dass sie einen Spalt (50) zwischen den Führungselementen (20) und den Führungsteilen (66) zulassen, wenn die Batterie (6) im Batterieraum (10) angeordnet ist.

5. Bergbaufahrzeug (1) nach einem der vorstehenden Ansprüche, wobei die Führungselemente (20) vertikale Führungen sind.

6. Bergbaufahrzeug (1) nach einem der vorstehenden Ansprüche, wobei die Führungselemente (20) Führungsschienen umfassen, die so konfiguriert sind, dass sie mit vorstehenden Führungsteilen (66) der Batterie (6) interagieren.

7. Bergbaufahrzeug (1) nach einem der vorstehenden Ansprüche, wobei die Führungselemente (20) einen oberen Abschnitt (22) und einen Hauptabschnitt (24) umfassen, wobei der obere Abschnitt (22) zum Hauptabschnitt (24) hin verjüngt ist.

8. Bergbaufahrzeug (1) nach Anspruch 7, wobei der obere Abschnitt (22) der Führungselemente (20) in Bezug auf den Hauptabschnitt (24) und die Batterie (6) nach außen geneigt ist.

9. Bergbaufahrzeug (1) nach einem der vorstehenden Ansprüche, wobei die mindestens eine Verriegelungsvorrichtung (30) einen Verriegelungsabschnitt (32) umfasst, der so konfiguriert ist, dass er sich linear zwischen einer verriegelten Stellung und einer entriegelten Stellung bewegt.

10. Bergbaufahrzeug (1) nach Anspruch 9, wobei der Verriegelungsabschnitt (32) federbelastet ist.

11. Bergbaufahrzeug (1) nach einem von Anspruch 1-8, wobei die mindestens eine Verriegelungsvorrichtung (30) einen drehbaren Verriegelungsabschnitt (82) umfasst.

12. Bergbaufahrzeug (1) nach einem der Ansprüche 9-11, wobei die mindestens eine Verriegelungsvorrichtung (30) eine Betätigungsvorrichtung (36) zum Bewegen des Verriegelungsabschnitts (32; 82) umfasst.

13. Bergbaufahrzeug (1) nach einem der vorstehenden Ansprüche, wobei die mindestens eine Verriegelungsvorrichtung (30) ein Manövriermittel (37) umfasst, das so angeordnet ist, dass es von außerhalb des Fahrzeugs (1) für manuelle Betätigung der mindestens einen Verriegelungsvorrichtung (30) zugänglich ist.

14. Batterie (6) zum Abgeben von Leistung zum Antreiben eines Bergbaufahrzeugs (1) und/oder zum Durchführen von Bergbauoperationen, wobei die Batterie (6) so konfiguriert ist, dass sie in einem Batterieraum (10) eines Bergbaufahrzeugs (1) nach einem der vorstehenden Ansprüche herausnehmbar angeordnet ist.

15. Verfahren zum Austauschen einer Batterie (6) in einem Bergbaufahrzeug (1) mit einem Fahrgestell (2) und einem Antriebsstrang (3), der konfiguriert ist für elektrischen Antrieb, wobei die Batterie (6) herausnehmbar angeordnet ist, um Leistung zum Antreiben des Fahrzeugs (1) und/oder zum Durchführen von Bergbauoperationen abzugeben, wobei das Fahrzeug (1) einen Batterieraum (10) umfasst, der so konfiguriert ist, dass er die Batterie (6) unterbringt, wobei der Batterieraum (10) einen Boden (12) umfasst, der so konfiguriert ist, dass er die Batterie (6) aufnimmt und trägt, und der Batterieraum (10) Teil des Fahrzeugfahrgestells (2) ist; wobei Führungselemente (20) im Batterieraum (10) angeordnet sind, um die Batterie (6) in Stellung zu führen; mindestens eine Verriegelungsvorrichtung (30), die im Batterieraum (10) so angeordnet ist, dass sie die Batterie (6) verriegelt und vertikale Bewegung der Batterie (6) im Batterieraum (10) einschränkt; und Halteelemente (40), die im Batterieraum (10) so angeordnet sind, dass sie horizontale Bewegung der Batterie (6) im Batterieraum (10) einschränken, wobei die mindestens eine Verriegelungsvorrichtung (30) am Boden (12) des Batterieraums (10) so angeordnet ist und so konfiguriert ist, dass sie mit einem Verriegelungsteil (65) an einer Bodenwand (63) der Batterie (6) interagiert, um das Verriegeln zu erreichen;
Befestigen (s101) einer Hebeanordnung (90) an der Batterie (6);
Deaktivieren (s102) der mindestens einen Verriegelungsvorrichtung (30), um die Batterie (6) aus dem Batterieraum (10) zu entriegeln;
Anheben (s103) der Batterie (6) aus dem Batterieraum (10) heraus anhand der Hebeanordnung (90), einschließlich Anheben der Batterie (6) in einer im Wesentlichen vertikalen Richtung, wobei die Batterie (6) durch die Führungselemente (20) geführt wird;
Anordnen (s104) einer Austauschbatterie (6) im Batterieraum (10) anhand einer Hebeanordnung (90), Absenken der Austauschbatterie (6) in Stellung, geführt durch die Führungselemente (20); und Aktivieren (s105) der mindestens einen Verriegelungsvorrichtung (30), um die Batterie (6) im Batterieraum (10) zu verriegeln.

## Revendications

1. Véhicule minier (1) avec un châssis (2) et un groupe motopropulseur (3) configuré pour la propulsion électrique, le groupe motopropulseur (3) comprenant une batterie (6) agencée de manière amovible pour fournir de l'énergie pour la propulsion du véhicule (1) et/ou pour mettre en œuvre des opérations minières, le véhicule (1) comprenant :
un compartiment de batterie (10) configuré pour accueillir la batterie (6), le compartiment de batterie (10) comprenant un fond (12) configuré pour recevoir et supporter la batterie (6), et le compartiment de batterie (10) faisant partie du châssis (2) ;
des éléments de guidage (20) agencés dans le compartiment de batterie (10) pour guider la batterie (6) en position ;
au moins un dispositif de verrouillage (30) agencé pour verrouiller la batterie (6) et limiter le mouvement vertical de la batterie (6) dans le compartiment de batterie (10) ; et des éléments de maintien (40) agencés dans le compartiment de batterie (10) pour limiter le mouvement horizontal de la batterie (6) dans le compartiment de batterie (10), dans lequel l'au moins un dispositif de verrouillage (30) est agencé au niveau du fond (12) du compartiment de batterie (10) et est configuré pour interagir avec une partie de verrouillage (65) au niveau d'un fond de la batterie (6) afin de réaliser le verrouillage.

2. Véhicule minier (1) selon la revendication 1, dans lequel les éléments de maintien (40) sont configurés pour interagir avec des parties de maintien (67) de la batterie (6), afin de limiter le mouvement horizontal de la batterie (6).

3. Véhicule minier (1) selon l'une quelconque des revendications précédentes, dans lequel les éléments de guidage (20) sont configurés pour interagir avec des parties de guidage (66) de la batterie (6).

4. Véhicule minier (1) selon la revendication 3, dans lequel les éléments de guidage (20) et les parties de guidage (66) sont configurés pour laisser un espace (50) entre les éléments de guidage (20) et les parties de guidage (66) lorsque la batterie (6) est agencée dans le compartiment de batterie (10).

5. Véhicule minier (1) selon l'une quelconque des revendications précédentes, dans lequel les éléments de guidage (20) sont des guides verticaux.

6. Véhicule minier (1) selon l'une quelconque des revendications précédentes, dans lequel les éléments de guidage (20) comprennent des rails de guidage configurés pour interagir avec des parties de guidage (66) saillantes de la batterie (6).

7. Véhicule minier (1) selon l'une quelconque des revendications précédentes, dans lequel les éléments de guidage (20) comprennent une partie supérieure (22) et une partie principale (24), dans lequel la partie supérieure (22) est effilée vers la partie principale (24).

8. Véhicule minier (1) selon la revendication 7, dans lequel la partie supérieure (22) des éléments de guidage (20) est inclinée vers l'extérieur par rapport à la partie principale (24) et à la batterie (6).

9. Véhicule minier (1) selon l'une quelconque des revendications précédentes, dans lequel l'au moins un dispositif de verrouillage (30) comprend une partie de verrouillage (32) configurée pour se déplacer linéairement entre une position verrouillée et une position déverrouillée.

10. Véhicule minier (1) selon la revendication 9, dans lequel la partie de verrouillage (32) est à ressort.

11. Véhicule minier (1) selon l'une quelconque des revendications 1 à 8, dans lequel l'au moins un dispositif de verrouillage (30) comprend une partie de verrouillage (82) rotative.

12. Véhicule minier (1) selon l'une quelconque des revendications 9 à 11, dans lequel l'au moins un dispositif de verrouillage (30) comprend un dispositif d'actionnement (36) pour déplacer la partie de verrouillage (32 ; 82).

13. Véhicule minier (1) selon l'une quelconque des revendications précédentes, dans lequel l'au moins un dispositif de verrouillage (30) comprend un moyen de manoeuvre (37), agencé pour être accessible depuis l'extérieur du véhicule (1) pour l'actionnement manuel de l'au moins un dispositif de verrouillage (30).

14. Batterie (6) d'alimentation électrique pour la propulsion d'un véhicule minier (1) et/ou pour mettre en œuvre des opérations minières, la batterie (6) étant configurée pour être agencée de manière amovible dans un compartiment de batterie (10) d'un véhicule minier (1) selon l'une quelconque des revendications précédentes.

15. Procédé de remplacement d'une batterie (6) dans un véhicule minier (1) doté d'un châssis (2) et d'un groupe motopropulseur (3) configuré pour la propulsion électrique, la batterie (6) étant agencée de manière amovible pour fournir l'énergie nécessaire à la propulsion du véhicule (1) et/ou pour mettre en œuvre des opérations minières, le véhicule (1) comprenant un compartiment de batterie (10) configuré pour accueillir la batterie (6), le compartiment de batterie (10) comprenant un fond (12) configuré pour recevoir et supporter la batterie (6), et le compartiment de batterie (10) faisant partie du châssis (2) de véhicule ; des éléments de guidage (20) agencés dans le compartiment de batterie (10) pour guider la batterie (6) en position ; au moins un dispositif de verrouillage (30) agencé dans le compartiment de batterie (10) pour verrouiller la batterie (6) et limiter le mouvement vertical de la batterie (6) dans le compartiment de batterie (10) ; et des éléments de maintien (40) agencés dans le compartiment de batterie (10) pour limiter le mouvement horizontal de la batterie (6) dans le compartiment de la batterie (10), dans lequel l'au moins un dispositif de verrouillage (30) est agencé au fond (12) du compartiment de batterie (10) et est configuré pour interagir avec une partie de verrouillage (65) sur une paroi inférieure (63) de la batterie (6) pour réaliser le verrouillage, le procédé comprenant :
la fixation (s101) d'un dispositif de levage (90) à la batterie (6) ;
la désactivation (s102) de l'au moins un dispositif de verrouillage (30) pour déverrouiller la batterie (6) du compartiment de batterie (10) ;
le levage (s103) de la batterie (6) hors du compartiment de batterie (10) au moyen du dispositif de levage (90), incluant le levage de la batterie (6) dans une direction sensiblement verticale, moyennant quoi la batterie (6) est guidée par les éléments de guidage (20) ;
l'agencement (s104) d'une batterie (6) de remplacement dans le compartiment de batterie (10) au moyen d'un dispositif de levage (90) abaissant la batterie (6) de remplacement en position, guidée par les éléments de guidage (20) ; et l'activation (s105) de l'au moins un dispositif de verrouillage (30) pour verrouiller la batterie (6) dans le compartiment de batterie (10).
